(19) Europäisches Patentamt
European Patent Office
Office européen des brevets

(11) Numéro de publication: 0 269 469 B1

(12) # FASCICULE DE BREVET EUROPEEN

(45) Date de publication de fascicule du brevet: **02.01.92**

(51) Int. Cl.5: **C03C 17/28**, C08G 18/48, C08G 18/58, C08G 18/78, C08G 18/79

(21) Numéro de dépôt: **87402185.0**

(22) Date de dépôt: **01.10.87**

(54) **Couche de couverture transparente en polyuréthane élastique souple pour substrats transparents de verre ou de matière plastique.**

(30) Priorité: **06.10.86 DE 3633950**
**12.02.87 DE 3704294**

(43) Date de publication de la demande:
**01.06.88 Bulletin 88/22**

(45) Mention de la délivrance du brevet:
**02.01.92 Bulletin 92/01**

(84) Etats contractants désignés:
**AT BE CH DE ES FR GB IT LI LU NL SE**

(56) Documents cités:
**EP-A- 0 158 053**
**EP-A- 0 190 517**
**EP-A- 0 236 201**
**US-A- 4 166 149**

(73) Titulaire: **SAINT-GOBAIN VITRAGE INTERNATIONAL**
**18, avenue d'Alsace**
**F-92400 Courbevoie(FR)**

(72) Inventeur: **Rädisch, Helmer, Dr.**
**Nizzaallee 36**
**W-5100 Aachen(DE)**
Inventeur: **Holzer, Gerhard, Dr.**
**Dr. Josef Lamby Strasse 2**
**W-5100 Aachen(DE)**
Inventeur: **Gelderie, Udo**
**An Der Waldmeisterhütte 34**
**W-5140 Stolberg(DE)**
Inventeur: **Breuer, Kornelia**
**Fritz-Erler Ring 34**
**W-5173 Aldenhoven(DE)**

(74) Mandataire: **Muller, René et al**
**SAINT-GOBAIN RECHERCHE 39, quai Lucien Lefranc**
**F-93304 Aubervilliers(FR)**

EP 0 269 469 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne une couche de couverture transparente pour des vitres ou autres substrats transparents de verre ou de matière plastique, faite de polyuréthane élastique souple qui est préparé à partir d'un mélange de réaction dont le composant isocyanate contient au moins un polyisocyanate aliphatique essentiellement trifonctionnel formé sur base du 1,6-hexaméthylènediisocyanate et ayant une structure de biuret ou d'isocyanurate, une teneur en radicaux NCO de 12,6 à 28% en poids et un poids moléculaire moyen d'environ 450 à environ 1000 g/mole et dont le composant polyol contient un polyéther-polyol difonctionnel sulfoné ou contenant des radicaux sulfonate ayant une teneur en radicaux OH de 0,5 à 13,2% en poids et un poids moléculaire moyen d'environ 250 à 6500 g/mole et un polyol trifonctionnel à base de triméthylolpropane et d'oxyde de propylène ayant une teneur en radicaux OH d'environ 5,1 à 12,8% en poids et un poids moléculaire moyen d'environ 400 à environ 1000 g/mole.

Des couches de couverture élastiques souples transparentes de ce genre font l'objet de la demande de brevet allemand P 36 05 765.7. Elles ont,d'une part, la propriété que sous les sollicitations des genres habituels qui conduisent avec les matières plastiques plus dures à des déformations superficielles et des défoncements en rayures, elles ne subissent qu'une déformation élastique qui s'efface après peu de temps et, d'autre part, l'avantage que la formation d'une condensation d'humidité gênante est empêchée ou diminuée. L'empêchement ou la diminution d'une condensation d'humidité gênante est dû en l'occurrence à un effet d'étalement de l'eau,qui est obtenu par l'utilisation de polyéther-polyols difonctionnels sulfonés ou contenant des radicaux sulfonate dans le mélange de réaction pour la préparation des couches de couverture.

Les couches de couverture élastiques souples de ce genre peuvent soit être formées directement sur le substrat à revêtir, auquel cas la surface appropriée est revêtue du mélange de réaction, soit être appliquées sous la forme de feuilles déjà préparées sur le substrat à revêtir. Dans ce dernier cas, les feuilles sont fabriquées par application du mélange de réaction sur un support de coulée, les feuilles étant détachées du support de coulée après achèvement de la réaction ou durcissement du mélange de réaction.

Il s'est révélé que les propriétés anti-buée des feuilles préparées peuvent être différentes sur les deux surfaces. Par exemple,lorsque le support de coulée consiste en métal ou en une plaque de verre, l'effet anti-buée d'une feuille fabriquée sur un tel support de coulée est sensiblement plus faible sur la surface supérieure, c'est-à-dire la face qui a été exposée à l'atmosphère ambiante, que sur la surface qui s'est trouvée au contact du support de coulée.

L'invention a pour but d'améliorer davantage l'effet anti-buée des couches de couverture décrites ci-dessus, et ce en particulier sur la surface se trouvant au contact de l'atmosphère ambiante lors de la formation des couches de couverture à partir du mélange de réaction.

Conformément à l'invention, ce but est atteint du fait qu'on utilise comme polyéther-polyol difonctionnel sulfoné ou contenant des radicaux sulfonate un polyoxyalcoylène-éther de 1,2- ou 1,3-diols de formule

$$R\text{-}CH_2O—(C_2H_4O—)_n\text{-}(C_3H_6O—)_m\text{-}CH_2CH_2CH_2—SO_3X$$

où

R = 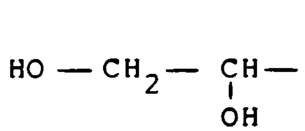 ou 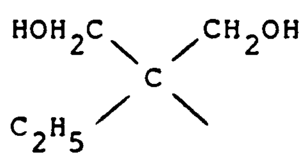 ,

X = ion H, sodium ou ammonium,
n = 0 à 100,
m = 0 à 30, et

$$n + m \geqq 1$$

et que le mélange de réaction contient en outre un copolymère non ionique à base de diméthylpolysiloxane modifié par polyoxyalcoylène (polyéther-polysiloxane) d'un poids moléculaire moyen d'environ 500-2000 g/mole de la formule générale

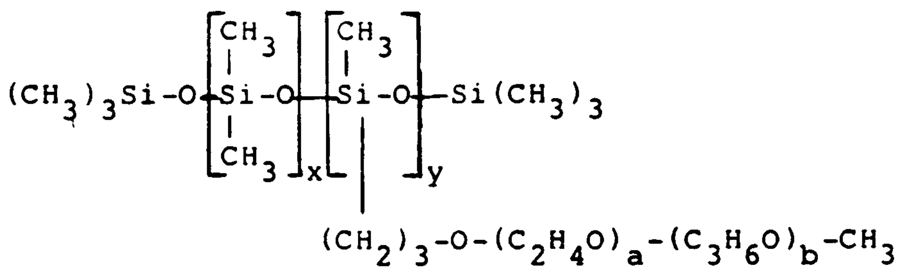

où le rapport x/y = 5/1 à 1/1,
a = 80 - 100 % en poids et
b = 20 - 0% en poids

Conformément à l'invention, on utilise donc, d'une part,certains polyéther-polyols difonctionnels sulfonés ou contenant des radicaux sulfonate et, d'autre part, en outre certains polyéther - polysiloxanes. Ces polyéther - polysiloxanes ne participent à aucune liaison chimique avec les polyisocyanates, mais sont insérés physiquement dans la couche de couverture et dès lors aussi dans ses surfaces. Conjointement avec les polyéther-polyols difonctionnels sulfonés ou contenant des radicaux sulfonate, ils agissent sur les gouttelettes d'eau en cours de condensation comme agents mouillants et font baisser la tension superficielle entre la couche de couverture et les gouttelettes d'eau. Cet effet est observable de la même façon sur les deux surfaces d'une telle couche de couverture. Ainsi que cela s'est révélé, aucun effet anti-buée notable n'est observable lors de l'addition du polyéther-polysiloxane seul à un mélange de réaction, sans la présence simultanée du polyéther-polyol sulfoné ou contenant des radicaux sulfonate. L'augmentation souhaitée de l'effet anti-buée se manifeste au contraire exclusivement lors de la présence simultanée du polyéther-polyol sulfoné ou contenant des radicaux sulfonate, c'est-à-dire par l'effet synergique du polyéther-polyol sulfoné ou contenant des radicaux sulfonate avec le polyéther-polysiloxane non ionique. La couche de couverture acquiert de cette façon sur les deux surfaces des propriétés hydrophiles accrues et une action anti-buée très améliorée qui se manifeste encore même après 10 heures d'ébullition de la couche de couverture dans de l'eau. D'autre part, les propriétés physico-mécaniques de la couche de couverture ne sont pas modifiées de façon inadmissible par l'addition du polyéther-polyol, mais se conservent au contraire pleinement dans la mesure nécessaire.

Comme polyéther-polyols difonctionnels sulfonés ou contenant des radicaux sulfonate, on utilise de préférence des polyéther-1,3-diols d'un poids moléculaire moyen d'environ 1300 g/mole. De tels polyéther-polyols et des procédés pour leur préparation sont décrits plus en détail dans le document DE-PS 34 07 563.

D'autres formes de réalisation avantageuses et développements de l'invention font l'objet des revendications dépendantes et ressortent de la description de différents exemples d'application.

Pour l'évaluation des propriétés physico-mécaniques des couches de couverture en polyuréthane élastique souple, on détermine comme propriétés représentatives le module E, la résistance à l'abrasion et la dureté au microrayage qui, dans leur ensemble, permettent d'affirmer que la couche de couverture a les propriétés d'autoréparation nécessaires et le comportement à l'usage requis. Le module E est déterminé en l'occurrence suivant le procédé décrit dans la norme DIN 53.457. Pour la détermination de la résistance à l'abrasion, on applique le procédé décrit dans la norme ECE R-43, suivant lequel deux rouleaux de friction ayant un effet abrasif viennent agir sous une charge de 500 g pendant 100 tours sur l'éprouvette tournante. Pour l'évaluation de l'abrasion consécutive à cette sollicitation, l'augmentation de turbidité est mesurée par comparaison avec la turbidité initiale avant le traitement suivant le procédé également décrit dans la norme ECE R-43, et exprimée en %. La dureté au microrayage est déterminée suivant le procédé d'Erichsen, suivant lequel on utilise un montage expérimental tel que décrit dans la norme DIN 53.799, sauf que le diamant de rayage conique utilisé présente un angle conique de 50 degrés et un rayon de courbure de 15µm au sommet du cône. Pour l'évaluation de la résistance au rayage, on indique le poids de sollicitation le plus élevé du diamant de rayage pour lequel aucune lésion visible permanente de la surface n'est identifiable.

On sait par expérience que les couches de couverture en polyuréthane transparentes autoréparatrices peuvent être utilisées comme couches anti-éclats lorsque le module E de ces couches est situé entre 2 et 20 $N/mm^2$, l'augmentation de turbidité par abrasion suivant ECE R-43 reste inférieure à 4% et la dureté au microrayage suivant Erichsen est supérieure à 10 p. De même, les couches de couverture hydrophiles ne se prêtent à une utilisation durable pratique que lorsque les propriétés indiquées se situent à l'intérieur de ces limites.

Pour l'évaluation de l'aptitude au mouillage de la couche de couverture et donc de l'effet anti-buée, l'angle de raccordement de gouttes d'eau déposées à la surface de la couche de couverture est mesuré à l'aide d'un microscope à goniomètre. Avec les couches de couverture connues faites d'un polyuréthanne élastique souple qui ne manifestent pas d'effet anti-buée, la grandeur de l'angle de raccordement est de 70 à 80 degrés et avec les couches de couverture qui contiennent comme additif étalant l'eau uniquement au moins un polyéther-polyol difonctionnel sulfoné ou contenant des radicaux sulfonate, la grandeur de l'angle de raccordement est d'environ 45 à 80 degrés. Au contraire, la grandeur de l'angle de raccordement avec les couches de couverture modifiées conformément à l'invention est nettement diminuée et peut même être abaissée jusqu'à zéro degré.

Différents exemples d'exécution dans le cadre des compositions revendiquées sont décrits ci-après et les propriétés mécaniques et anti-buée mesurées sur chacune des couches de couverture sont indiquées, l'exemple 1 et l'exemple 2 ne concernant pas des couches de couverture conformes à l'invention, mais servant uniquement pour la comparaison.

EXEMPLE 1

On prépare une couche de couverture telle qu'elle est décrite dans la demande de brevet allemand P 36 05 765. A cette fin, on utilise 50 g d'un polyisocyanate essentiellement trifonctionnel contenant des radicaux biuret à base de 1,6-hexaméthylènediisocyanate ayant une teneur en radicaux NCO libres de 23% en poids et un poids moléculaire moyen d'environ 550 g/mole, 50 g d'un polyol trifonctionnel à base de triméthylolpropane ayant une teneur en OH de 11% en poids et un poids moléculaire moyen d'environ 500 g/mole, ainsi que 5 g d'un polyéther-1,3-diol difonctionnel contenant des radicaux sulfonate ayant une teneur en radicaux OH de 3,4% en poids et un poids moléculaire moyen d'environ 1000 g/mole, de la formule indiquée ci-dessus où

R = 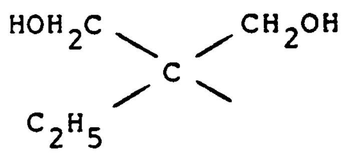 ,

X = ion sodium,
n = 16, et
m = 0,

Comme additifs, on ajoute au polyol 0,05 g de dilaurate de dibutylétain comme catalyseur et 0,1 g d'un ester alcoylique fluoré comme agent d'écoulement.

On agite le mélange vivement à la température ambiante pendant 10 minutes. On coule le mélange de réaction ainsi homogénéisé en une épaisseur de couche de 0,5 mm sur des plaques de verre chauffées à environ 60 °C. La réaction de durcissement a lieu pendant 30 minutes à 90 °C.

Après 48 heures de conservation à 20 °C dans une humidité relative de 50%, on détache les feuilles et on détermine leurs propriétés, ce qui donne les résultats suivants:

Module E 7,3±0,2 N/$mm^2$
Augmentation de turbidité par abrasion 4,0%
Dureté au microrayage 27 p
Angle de raccordement (mesuré sur la surface de la feuille qui s'est trouvée au contact de la surface du verre) 44 degrés
Angle de raccordement (mesuré sur la surface exposée à l'air ambiant) 80 degrés

Les propriétés mécaniques de cette couche de couverture se situent à l'intérieur des limites exigées. Le comportement à la buée est amélioré essentiellement sur la surface de la feuille qui s'est trouvée au contact de la surface du verre.

EXEMPLE 2

On prépare une couche de couverture à partir d'un mélange de réaction tel que décrit dans l'exemple 1, mais au lieu du polyéther-1,3-diol contenant des radicaux sulfonate, on ajoute un polyéther-polysiloxane non ionique d'un poids moléculaire moyen d'environ 700 g/mole de la formule générale indiquée ci-dessus, où le rapport x/y = 1/1, a = 100% en poids et b = 0% en poids, en une quantité de 1 g.

On conserve à nouveau pendant 48 heures à 20 °C dans une humidité relative de l'air de 50% les

éprouvettes ainsi préparées. Ensuite, on détermine les propriétés des couches de couverture, ce qui donne les résultats de mesure suivants:

Module E 7,0±0,2 $N/mm^2$
Augmentation de turbidité par abrasion 4,1%
Dureté au microrayage 36 p
Angle de raccordement (côté verre) 50 degrés
Angle de raccordement (côté air) 63 degrés

Les propriétés mécaniques de cette couche de couverture se situent à l'intérieur des limites exigées; l'effet anti-buée de cette couche de couverture n'est toutefois suffisant ni du côté du support de coulée, ni du côté air.

EXEMPLE 3

Pour la préparation d'une couche de couverture conforme à l'invention, on utilise un mélange de réaction auquel tant un polyéther-polyol difonctionnel contenant des radicaux sulfonate qu'un polyéther-polysiloxane non ionique sont ajoutés.

A cette fin, on mélange ensemble 50 g d'un polyisocyanate essentiellement trifonctionnel contenant des radicaux biuret à base de 1,6-hexaméthylènediisocyanate ayant une teneur en radicaux NCO libres de 23% en poids et un poids moléculaire moyen d'environ 550 g/mole, 50 g d'un polyol trifonctionnel à base de triméthylolpropane ayant une teneur en OH de 11% en poids et un poids moléculaire moyen d'environ 500 g/mole, 5 g d'un polyéther-1,3-diol difonctionnel contenant des radicaux sulfonate ayant une teneur en radicaux OH de 2,6% en poids et un poids moléculaire moyen d'environ 1300 g/mole,de la formule indiquée ci-dessus où

R = 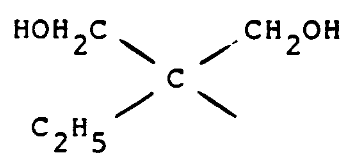 ,

X = ion sodium,
n = 23, et
m = 0

et 1 g du polyéther-polysiloxane cité dans l'exemple 2. Comme additifs, on ajoute au polyol 0.05 g de dilaurate de dibutylétain comme catalyseur et 1,0 g d'une amine à empêchement stérique comme agent de protection contre la lumière.

On agite le mélange vivement à la température ambiante pendant 10 minutes. On coule le mélange de réaction ainsi homogénéisé en une épaisseur de couche de 0,5 mm sur des plaques de verre chauffées à environ 60 °C. La réaction de durcissement a lieu pendant 30 minutes à 90 °C.

Après 48 heures de conservation à 20 °C dans une humidité relative de 50%,on détache les feuilles et on détermine leurs propriétés, ce qui donne les résultats suivants:

Module E 6,1±0,4$N/mm^2$
Augmentation de turbidité par abrasion 3,1%
Dureté au microrayage 21 p
Angle de raccordement (mesuré côté verre) 30 degrés
Angle de raccordement (mesuré côté air) 58 degrés

Les propriétés mécaniques de cette couche de couverture se situent à l'intérieur des limites exigées, et le comportement à la buée est simultanément notablement amélioré.

EXEMPLE 4

Pour la préparation d'une couche de couverture conforme à l'invention, on prépare un mélange de réaction tel que décrit dans l'exemple 3, mais dans lequel, au lieu du polyéther-1,3-diol contenant des radicaux sulfonate, on utilise un polyéther-1,2-diol difonctionnel contenant des radicaux sulfonate ayant une teneur en radicaux OH de 2,5% en poids et un poids moléculaire moyen de 1360 g/mole, de la formule indiquée ci-dessus, où

R = 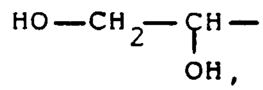,

X = ion $H^+$
n = 26, et
m = 0.

A partir du mélange de réaction, on prépare de la même façon que celle décrite dans l'exemple 3 une couche de couverture durcie sur laquelle on exécute les mesures.

On obtient les résultats de mesure suivants:

Module E 5,4±0,4 $N/mm^2$
Augmentation de turbidité par abrasion 3,5%
Dureté au microrayage 20 p
Angle de raccordement (mesuré côté verre) 35 degrés
Angle de raccordement (mesuré côté air) 62 degrés

Par conséquent, dans ce cas aussi, les propriétés mécaniques se situent à l'intérieur des limites indiquées, tandis que le comportement à la buée est aussi nettement amélioré.

## EXEMPLE 5

On prépare un mélange de réaction à partir de 50 g du polyisocyanate trifonctionnel cité dans les exemples précédents ayant une teneur en radicaux NCO libres de 23% en poids et un poids moléculaire moyen d'environ 550 g/mole, de 41 g d'un polyol trifonctionnel à base de triméthylolpropane ayant une teneur en OH de 11% en poids et un poids moléculaire moyen d'environ 500 g/mole, de 12 g d'un polyéther-1,3-diol difonctionnel contenant des radicaux sulfonate ayant une teneur en radicaux OH de 2,6% en poids et un poids moléculaire moyen d'environ 1300 g/mole, de la formule indiquée ci-dessus où

R = 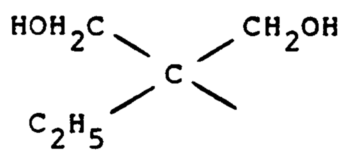 ,

X = ion sodium,
n = 23, et
m = 0,

et de 1 g du polyéther-polysiloxane décrit dans les exemples 2 et 3. On ajoute comme additifs au polyol 0,05 g de dilaurate de dibutylétain comme catalyseur et 1,0 g d'une amine à empêchement stérique comme agent de protection contre la lumière.

On conserve à nouveau pendant 48 heures à 20°C dans une humidité relative de l'air de 50% les éprouvettes ainsi préparées. Ensuite, on détermine les propriétés des couches de couverture, ce qui donne les résultats de mesure suivants:

Module E 7,8±0,4 $N/mm^2$
Augmentation de turbidité par abrasion 4,0%
Dureté au microrayage 26 p
Angle de raccordement (mesuré côté verre) 10 degrés
Angle de raccordement (mesuré côté air) 41 degrés

Par conséquent, dans ce cas également, les propriétés mécaniques se situent à l'intérieur des limites indiquées, tandis que le comportement à la buée est aussi notablement amélioré.

## EXEMPLE 6

On prépare un mélange de réaction tel que décrit dans l'exemple 5, mais dans lequel on augmente jusqu'à 5 g la quantité du polyéther-polysiloxane décrit dans le détail dans l'exemple 2. On ajoute comme additifs aux polyols 0,05 g de dilaurate de dibutylétain comme catalyseur et 1,0 g d'une amine à empêchement stérique comme agent de protection contre la lumière.

On agite le mélange vivement à la température ambiante pendant 10 minutes. On convertit le mélange

de réaction ainsi homogénéisé de la même façon que dans les exemples décrits précédemment en feuilles durcies sur lesquelles on exécute les mesures citées.

On obtient ainsi les résultats de mesure suivants:

Module E 5,5±0,8 N/mm²

Augmentation de turbidité après abrasion 3,2%

Dureté au microrayage 26 p

Angle de raccordement (mesuré sur la surface de la feuille qui s'est trouvée au contact de la surface du verre) 0 degré = étalement de l'eau

Angle de raccordement (surface de la feuille côté air) 7 degrés

Cette couche de couverture aussi présente des propriétés en raison desquelles elle se prête à une application pratique tant pour ce qui est de son comportement mécanique que pour ce qui est de son comportement à la buée.

EXEMPLE 7

On prépare un mélange de réaction comme dans l'exemple 6, mais en utilisant un polyéther-1,3-diol difonctionnel contenant des radicaux sulfonate, de la formule indiquée ci-dessus où

R = 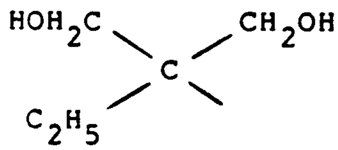 ,

X = ion sodium,

n = 14, et

m = 2

et ayant un poids moléculaire moyen d'environ 1000 g/mole et contenant 15% en poids des radicaux propoxy et 85% en poids de radicaux éthoxy pour la constitution indiquée, ainsi qu'un radical $SO_3^-Na^+$ terminal. La quantité de ce polyéther-1,3-diol contenant des radicaux sulfonate dans le mélange est de 12 g.

On convertit le mélange comme dans l'exemple 1 en une couche de couverture durcie sur laquelle on exécute les mesures.

On obtient ainsi les résultats de mesure suivants:

Module E 8,3±0,3 N/mm²

Augmentation de turbidité après abrasion 4,0%

Dureté au microrayage 20 p

Angle de raccordement (mesuré sur la surface de la feuille qui s'est trouvée au contact de la surface du verre) 5 degrés

Angle de raccordement (surface de la feuille côté air) 8 degrés

Cette couche de couverture aussi présente des propriétés en raison desquelles elle se prête à une application pratique tant pour ce qui est de son comportement mécanique que pour ce qui est de son comportement à la buée.

EXEMPLE 8

On prépare un mélange de réaction comme dans l'exemple 6, mais en ajoutant en une quantité de 5 g un polyéther-polysiloxane non ionique d'un poids moléculaire moyen d'environ 1000 g/mole, de la formule générale indiquée ci-dessus. Pour ce polyéther-polysiloxane, le rapport x/y = 1/1, a = 85% en poids et b = 15% en poids.

On convertit le mélange comme décrit dans l'exemple 1 en une couche de couverture durcie sur laquelle on exécute les mesures.

On obtient ainsi les résultats de mesure suivants:

Module E 6,3±0,4 N/mm²

Augmentation de turbidité après abrasion 3,8%

Dureté au microrayage 22 p

Angle de raccordement (mesuré sur la surface de la feuille qui s'est trouvée au contact de la surface du verre) 6 degrés

Angle de raccordement (surface de la feuille côté air) 10 degrés

Cette feuille également présente des propriétés en raison desquelles elle se prête à une application pratique tant pour ce qui est de son comportement mécanique que pour ce qui est de son comportement à la buée.

EXEMPLE 9

On prépare un mélange de réaction comme décrit dans l'exemple 8, mais en utilisant un polyéther-polysiloxane non ionique d'un poids moléculaire moyen d'environ 1100 g/mole, de la formule générale indiquée ci-dessus. Pour ce polyéther-polysiloxane, le rapport x/y = 5/1, a = 100% en poids et b = 0% en poids.

On convertit le mélange comme dans l'exemple 1 en une couche de couverture durcie sur laquelle on exécute les mesures.

On obtient ainsi les résultats de mesure suivants:

Module E 5,4±0,7 $N/mm^2$

Augmentation de turbidité après abrasion 3,9%

Dureté au microrayage 18 p

Angle de raccordement (mesuré sur la surface de la feuille qui s'est trouvée au contact de le surface du verre) 13 degrés

Angle de raccordement (surface de la feuille côté air) 15 degrés

Cette feuille également présente des propriétés en raison desquelles elle se prête à une application pratique tant pour ce qui est de son comportement mécanique que pour ce qui est de son comportement à la buée.

**Revendications**

**1.** Couche de couverture transparente pour des vitres ou autres substrats transparents de verre ou de matière plastique, faite de polyuréthane élastique souple qui est préparé à partir d'un mélange de réaction dont le composant isocyanate contient au moins un polyisocyanate aliphatique essentiellement trifonctionnel formé sur base du 1,6-hexaméthylènediisocyanate et ayant une structure de biuret ou d'isocyanurate, une teneur en radicaux NCO de 12,6 à 28% en poids et un poids moléculaire moyen d'environ 450 à environ 1000 g/mole et dont le composant polyol contient un polyéther-polyol difonctionnel sulfoné ou contenant des radicaux sulfonate ayant une teneur en radicaux OH de 0,5 à 13,2% en poids et un poids moléculaire moyen d'environ 250 à 6500 g/mole et un polyol trifonctionnel à base de triméthylolpropane et d'oxyde de propylène ayant une teneur en radicaux OH d'environ 5,1 à 12,8% en poids et un poids moléculaire moyen d'environ 400 à environ 1000 g/mole, caractérisée en ce qu'on utilise comme polyéther-polyol difonctionnel sulfoné ou contenant des radicaux sulfonate un polyoxyalcoylène-éther de 1,2- ou 1,3-diols de formule

$$R\text{-}CH_2O\text{—}(C_2H_4O\text{—})_n\text{-}(C_3H_6O\text{—})_m\text{-}CH_2CH_2CH_2\text{—}SO_3X$$

où

R = 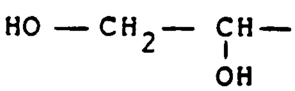 ou 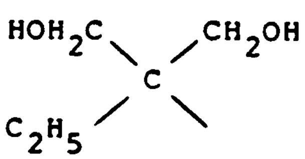 ,

X = ion H, sodium ou ammonium,
n = 0 à 100,
m = 0 à 30, et

$$n + m \geqq 1$$

et que le mélange de réaction contient en outre un copolymère non ionique à base de diméthylpolysiloxane modifié par polyoxyalcoylène (polyéther-polysiloxane) d'un poids moléculaire moyen d'environ 500-2000 g/mole de la formule générale

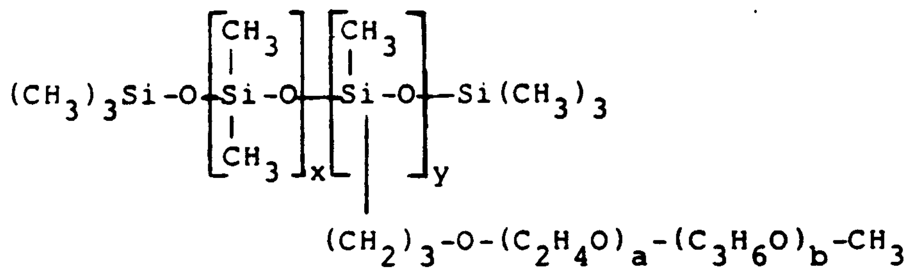

où le rapport x/y = 5/1 à 1/1,
a = 80 - 100 % en poids et
b = 20 - 0% en poids ,

2. Couche de couverture transparente suivant la revendication 1, caractérisée en ce que la proportion du polyéther-polysiloxane dans le mélange de réaction est de 1 à 5% en poids.

3. Couche de couverture transparente suivant la revendication 1 ou 2, caractérisée en ce que la proportion du polyéther-polyol difonctionnel sulfoné ou contenant des radicaux sulfonate dans le mélange de réaction est de 5 à 12% en poids.

4. Couche de couverture transparente suivant une ou plusieurs des revendications 1 à 3, caractérisée en ce qu'on utilise un polyéther-polysiloxane d'un poids moléculaire moyen d'environ 1000 g/mole.

5. Couche de couverture transparente suivant une ou plusieurs des revendications 1 à 4,caractérisée en ce que le polyéther-polysiloxane utilisé est formé de radicaux éthoxy et propoxy avec au moins 80% en poids de radicaux éthoxy dans la chaîne polyéther.

6. Couche de couverture transparente suivant la revendication 5, caractérisée en ce que le rapport éthoxy-propoxy dans les radicaux polyéther latéraux est de préférence de 100/0

**Claims**

1. Transparent covering film for panes or other transparent substrates of glass or plastics material, made of flexible, elastic polyurethane which is prepared from a reaction mixture, the isocyanate component of which contains at least one essentially trifunctional aliphatic polyisocyanate formed on a basis of 1,6-hexamethylene diisocyanate and having a biuret or isocyanurate structure, an NCO radicals content of 12.6 to 28% by weight and a mean molecular weight of approximately 450 to approximately 1,000 g/mole, and the polyol component of which contains a difunctional polyether-polyol, sulfonated or containing sulfonate radicals, having an OH radicals content of 0.5 to 13.2% by weight and a mean molecular weight of approximately 250 to 6,500 g/mole and a trifunctional polyol on a basis of trimethylol propane and propylene oxide having an OH radicals content of approximately 5.1 to 12.8% by weight and a mean molecular weight of approximately 400 to approximately 1,000 g/mole, characterized in that there is used, as difunctional polyether-polyol, sulfonated or containing sulfonate radicals, a polyoxyalkylene ether of 1,2-or 1,3-diols having the formula

$R-CH_2O-(C_2H_4O-)_n-(C_3H_6O-)_m-CH_2CH_2CH_2-SO_3X$

where

R = 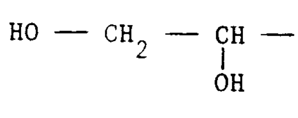 or 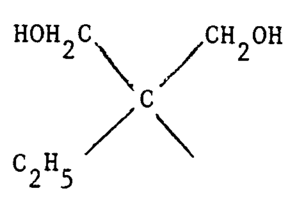

X = H, sodium or ammonium ion,

n = 0 to 100,
m = 0 to 30, and

n + m ≧ 1

and in that the reaction mixture contains, in addition, a nonionic copolymer based upon dimethyl polysiloxane modified by polyoxyalkylene (polyether-polysiloxane) having a mean molecular weight of approximately 500-2,000 g/mole and having the general formula

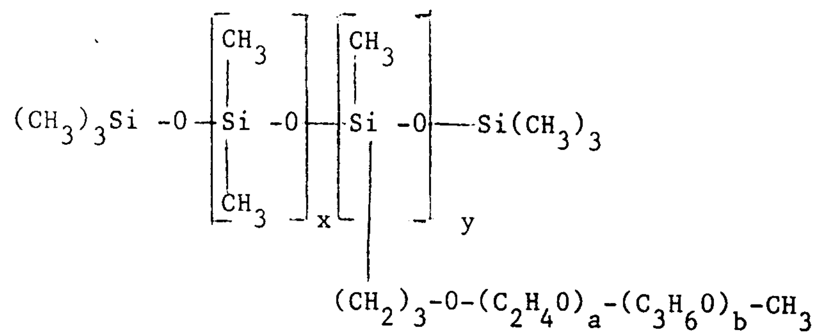

where the ratio x/y = 5/1 to 1/1,
a = 80 - 100% by weight and
b = 20 - 0% by weight.

**2.** Transparent covering film according to Claim 1, characterized in that the proportion of polyether-polysiloxane in the reaction mixture is from 1 to 5% approximately by weight.

**3.** Transparent covering film according to Claim 1 or 2, characterized in that the proportion of the difunctional polyether-polyol, sulfonated or containing sulfonate radicals, in the reaction mixture is from 5 to 12% approximately by weight.

**4.** Transparent covering film according to one or more of Claims 1 to 3, characterized in that a polyether-polysiloxane having a mean molecular weight of approximately 1,000 g/mole is used.

**5.** Transparent covering film according to one or more of Claims 1 to 4, characterized in that the polyether-polysiloxane used is formed of ethoxy and propoxy radicals with at least 80% by weight of ethoxy radicals in the polyether chain.

**6.** Transparent covering film according to Claim 5, characterized in that the ethoxy-propoxy ratio in the lateral polyether radicals is preferably approximately 100/0.

**Patentansprüche**

**1.** Transparente Deckschicht für Sichtscheiben oder andere transparente Glas- oder Kunststoffsubstrate, aus weichelastischem Polyurethan, das aus einer Reaktionsmischung hergestellt ist, deren Isocyanatkomponente wenigstens ein im wesentlichen trifunktionelles aliphatisches, auf der Basis von 1,6-Hexamethylendiisocyanat aufgebautes Polyisocyanat mit Biuret- oder Isocyanuratstruktur mit einem Gehalt an NCO-Gruppen von 12,6 bis 28 Gew.-% und einem mittleren Molekulargewicht von ca. 450 bis ca. 1000 g/mol, und deren Polyolkomponente ein difunktionelles sulfoniertes bzw. sulfonatgruppenhaltiges Polyetherpolyol mit einem Gehalt an OH-Gruppen von 0,5 bis 13,2 Gew.-% und einem mittleren Molekulargewicht von ca. 250 bis 6500 g/mol und ein trifunktionelles Polyol auf der Basis von Trimethylolpropan und Propylenoxid mit einem Gehalt an OH-Gruppen von 5,1 bis 12,8 Gew.-% und einem mittleren Molekulargewicht von ca. 400 bis ca. 1000 g/mol enthält, **dadurch gekennzeichnet,** daß als difunktionelles sulfoniertes bzw. sulfonatgruppenhaltiges yolyetherpolyol ein Polyoxyalkylenether von 1,2- oder 1,3-Diolendiol der Formel

$$R\text{-}CH_2O\text{-}(C_2H_4O\text{-})_n\text{-}(C_3H_6O\text{-})_m\text{-}CH_2CH_2CH_2\text{-}SO_3X$$

verwendet wird, wobei

R = 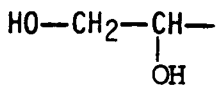 oder 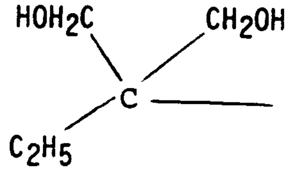 ,

X = H-, Natrium- oder Ammoniumion,
n = 0 bis 100,
m = 0 bis 30,

$n + m \geqq 1$

bedeuten, und daß die Reaktionsmischung zusätzlich ein nichtionisches Copolymeres auf der Basis von durchPolyoxyalkylen (Polyether-Polysiloxan) modifiziertem Dimethylpolysiloxan mit einem mittleren Molekulargewicht von ca. 500 - 2000 g/mol der allgemeinen Formel

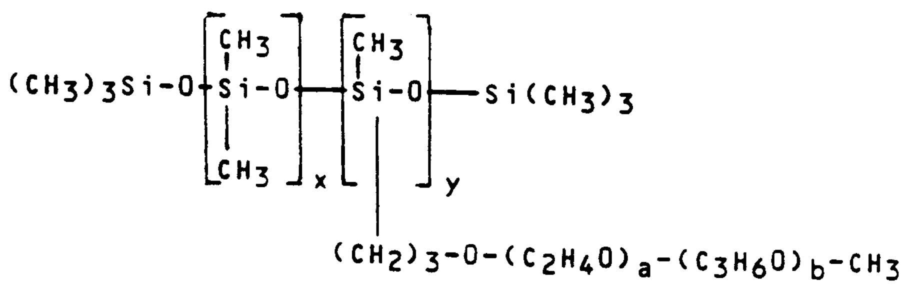

enthält, wobei

das Verhältnis x/y = 5/1 bis 1/1,
a = 80 - 100 Gew.-%, und
b = 20 - 0 Gew.-%

bedeuten.

2. Transparente Deckschicht nach Anspruch 1, dadurch gekennzeichnet, daß der Anteil des Polyether-Polysiloxans in der Reaktionsmischung 1 bis 5 Gew.-% beträgt.

3. Transparente Deckschicht nach Anspruch 1 oder 2, dadurch gekennzeichnet, daß der Anteil des difunktionellen sulfonierten bzw. sulfonatgruppenhaltigen Polyetherpolyols in der Reaktionsmischung 5 bis 12 Gew.-% beträgt.

4. Transparente Deckschicht nach einem oder mehreren der Ansprüche 1 bis 3, dadurch gekennzeichnet, daß ein Polyether-Polysiloxan mit einem mittleren Molekulargewicht von ca. 1000 g/mol verwendet wird.

5. Transparente Deckschicht nach einem oder mehreren der Ansprüche 1 bis 4, dadurch gekennzeichnet, daß das verwendete Polyether-Polysiloxan aus Ethoxy- und Propoxy-Gruppen mit wenigstens 80 Gew.-% Ethoxy-Gruppen in der Polyether-Kette gebildet ist.

6. Transparente Deckschicht nach Anspruch 5, dadurch gekennzeichnet, daß das Ethoxy-Propoxy-Verhältnis in den Polyether-Seitengruppen vorzugsweise 100/0 ist.